# EUROPEAN PATENT APPLICATION

(11) **EP 3 136 378 A1**
(43) Date of publication of application: **01.03.2017**
(21) Application number: 16179130.6
(22) Date of filing: 12.07.2016
(51) Int. Cl.: G09G 5/02

(54) **DISPLAY APPARATUS AND CONTROL METHOD THEREOF**

(30) Priority: 24.08.2015 KR 20150119117
(71) Applicant: Samsung Electronics Co., Ltd., Gyeonggi-do 16677 (KR)
(72) Inventor: LEE, Sang-min, Gyeonggi-do (KR); KIM, Ji-eun, Suwon-si (KR); NA, Hong-ju, Gyeonggi-do (KR); LEE, Woong-ki, Gyeonggi-do 16818 (KR)
(74) Representative: Appleyard Lees IP LLP

(57) **Abstract**

A display apparatus includes a signal receiver configured to receive an image signal, a display, and a storage configured to store a property value of the display in a first color space. The display is configured to display an image based on the received image signal and the stored property value of the display. The display apparatus further includes a controller configured to perform color calibration of the display.

## Description

### CROSS-REFERENCE TO RELATED APPLICATION

This application claims priority from Korean Patent Application No. 10-2015-0119117, filed on August 24, 2015, in the Korean Intellectual Property Office, the disclosure of which is incorporated herein by reference in its entirety.

### BACKGROUND

### 1. Field

Apparatuses and methods consistent with exemplary embodiments relate to a display apparatus and a control method thereof.

### 2. Description of the Related Art

In a display apparatus, a change occurs in brightness and color of an image displayed by the display apparatus due to electric, physical and optical properties. Therefore, when an image signal supplied by the same input source is displayed by different display apparatuses, colors of such image signal are reproduced a little bit differently. For example, even if the same broadcast program is supplied to display apparatuses through airwave or satellite, colors of the broadcast program displayed by the display apparatuses are different depending on the display apparatuses.

To resolve the foregoing problem, a display apparatus performs a color calibration to reproduce the impression of colors as desired by a user during a process prior to presenting an image to a user or after presenting it to a user.

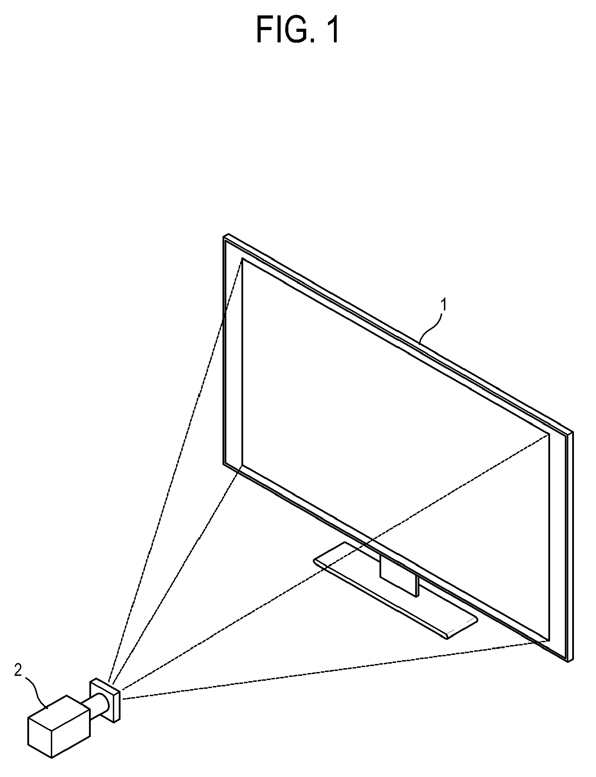

FIG. 1 illustrates a color calibration system including a display apparatus 1 and a spectrophotometer 2 for measuring an image output by a display apparatus according to conventional art.

As an example of a conventional method for performing a color calibration, a display apparatus performs processes of adjusting color values to change a color coordinate value of a display into a desired target color coordinate value, and measuring an image displayed by the display using the spectrophotometer 2 and confirming whether the adjustment was made as desired. Due to the foregoing, it is difficult for a user to perform the color calibration of the display apparatus 1 without equipment.

In addition, even if the spectrophotometer 2 is available, it is difficult to adjust the color coordinate value to a desired target color coordinate value at a time, and thus color measurement and adjustment may be repeated several times, which takes a long time.

Accordingly, a display apparatus capable of performing a color calibration to reproduce desired colors easily and promptly without a spectrophotometer is needed.

### SUMMARY

Exemplary embodiments may address at least the above problems and/or disadvantages and other disadvantages not described above. Also, the exemplary embodiments are not required to overcome the disadvantages described above, and may not overcome any of the problems described above.

According to an aspect of an exemplary embodiment, there is provided a display apparatus including a signal receiver configured to receive an image signal, a display, and a storage configured to store a property value of the display in a first color space. The display is configured to display an image based on the received image signal and the stored property value of the display. The display apparatus further includes a controller configured to perform color calibration of the display in which the controller is configured to generate a conversion coefficient for a conversion from the first color space into a second color space, based on a color coordinate value of the display in a second color space different from the first color space, determine index color coordinate values in the second color space corresponding to each of color values in the first color space displayable by the display, based on the conversion coefficient, change the stored property value based on an index color coordinate value having a color difference from a preset target color coordinate value of the display within a threshold value, among the index color coordinate values, and control the display to display another image based on the changed property value.

The signal receiver may be further configured to receive, from an external device, at least one among the color coordinate value and the preset target color coordinate value of the display.

The conversion coefficient may be generated based on the color coordinate value of the display and a white value.

The stored property value may be changed based on an index color coordinate value having a smallest color difference from the preset target color coordinate value, among the index color coordinate values.

The controller may be further configured to determine the color difference based on a dE2000 specification.

The controller may be further configured to convert the index color coordinate value of the second color space into an index color coordinate value of a third color space, and determine the color difference based on the index color coordinate value of the third color space.

The color calibration may be performed in response to a predetermined color calibration condition being satisfied.

The color calibration condition may include an initial installation of the display apparatus.

The color calibration condition may include an elapse of a predetermined time after a previous color calibration is performed.

The display apparatus may further include a user interface configured to receive a user input, and the color calibration may be performed in response to the received user input.

The display may be further configured to display a user interface (UI) including one or more items for the color calibration, and the color calibration may be performed based on a user input using the one or more items of the UI.

The one or more items may correspond to at least one among the color coordinate value and the preset target color coordinate value of the display.

According to an aspect of another exemplary embodiment, there is provided a control method of a display apparatus, the control method including receiving an image signal, and displaying an image based on the received image signal and a property value of a display in a first color space. The control method further includes performing color calibration of the display, the color calibration including generating a conversion coefficient for a conversion from the first color space into a second color space, based a color coordinate value of the display in the second color space different from the first color space determine index color coordinate values in the second color space corresponding to each of color values in the first color space displayable by the display, based on the conversion coefficient, and changing the property value based on an index color coordinate value having a color difference from a preset target color coordinate value of the display within a threshold value, among the index color coordinate values. The control method further includes displaying another image based on the changed property value.

The control method may further include receiving, from an external device, at least one among the color coordinate value and the preset target color coordinate value of the display.

The generating the conversion coefficient may include generating the conversion coefficient based on the color coordinate value of the display apparatus and a white value.

The changing the property value may include changing the property value based on an index color coordinate value having a smallest color difference from the preset target color coordinate value, among the index color coordinate values.

The control method may further include determining the color difference based on a dE2000 specification.

The control method may further include converting the index color coordinate value of the second color space into an index color coordinate value of a third color space, and determining the color difference based on the index color coordinate value of the third color space.

The performing the color calibration may include performing the color calibration in response to a preset color calibration condition being satisfied.

The color calibration condition may include an initial installation of the display apparatus.

The color calibration condition may include an elapse of predetermined time after a previous color calibration is performed.

The control method may further include receiving a user input, and the performing the color calibration may include performing the color calibration in response to the received user input.

The control method may further include displaying a user interface (UI) including one or more items for performing the color calibration, and the performing the color calibration may include performing the color calibration based on a user input using the one or more items of the UI.

The one or more items may correspond to at least one among the color coordinate value and the preset target color coordinate value of the display.

### BRIEF DESCRIPTION OF THE DRAWINGS

The above and/or other aspects will be more apparent by describing exemplary embodiments with reference to the accompanying drawings, in which:
FIG. 1 is a conventional color calibration system;
FIG. 2 is a chromaticity distribution diagram in an xyY color space;
FIG. 3 is a chromaticity distribution diagram in an RGB color space;
FIG. 4 is a block diagram of a display apparatus according to an exemplary embodiment;
FIG. 5 is a chromaticity distribution diagram in an xyY color space including a color gamut that may be reproduced by the display apparatus according to an exemplary embodiment, a color gamut that is set to limit color reproduction of a display, and a color gamut that is subject to color calibration;
FIG. 6 illustrates an xyY matrix that represents a coordinate value of an xyY color space;
FIG. 7 illustrates a formula for changing a coordinate value of a xyY color space to a coordinate value of an XYZ color space;
FIG. 8 illustrates an XYZ matrix that represents a coordinate value of an XYZ color space;
FIG. 9 illustrates a formula for calculating an S matrix as a coefficient falling under a luminance ratio of a color coordinate value of a display;
FIG. 10 illustrates a formula for calculating a conversion coefficient for converting an RGB color space into an XYZ color space;
FIG. 11 illustrates a relationship among an RGB color space, an XYZ color space and a conversion coefficient;
FIG. 12 illustrates a formula for comparing a color difference in a Lab color space to identify a color difference among color coordinates;
FIG. 13 is a chromaticity distribution diagram of an xyY color space including a target color gamut and a calibrated color gamut after a color calibration is completed according to an exemplary embodiment;
FIG. 14 is a flowchart of an operation process of a display apparatus according to an exemplary embodiment;
FIG. 15 is a flowchart of a color calibration process according to an exemplary embodiment;
FIG. 16 is a flowchart of an operation process of a display apparatus that performs a color calibration when the display apparatus is initially installed according to an exemplary embodiment;
FIG. 17 illustrates a user interface (UI) provided to a user before a color calibration is performed when the display apparatus is initially installed according to an exemplary embodiment;
FIG. 18 is a flowchart of an operation process of a display apparatus that performs a color calibration predetermined time after a previous color calibration is performed according to an exemplary embodiment;
FIG. 19 illustrates a UI provided to a user before a color calibration is performed predetermined time after a previous color calibration is performed;
FIG. 20 illustrates a display that displays a UI for performing a color calibration according to an exemplary embodiment; and
FIG. 21 illustrates an example of a plurality of standard specifications provided to select a target color coordinate according to an exemplary embodiment.

### DETAILED DESCRIPTION OF EXEMPLARY EMBODIMENTS

Exemplary embodiments are described in greater detail below with reference to the accompanying drawings.

In the following description, like drawing reference numerals are used for like elements, even in different drawings. The matters defined in the description, such as detailed construction and elements, are provided to assist in a comprehensive understanding of the exemplary embodiments. However, it is apparent that the exemplary embodiments can be practiced without those specifically defined matters. Also, well-known functions or constructions may not be described in detail because they would obscure the description with unnecessary detail.

It will be understood that the terms "comprises" and/or "comprising" used herein specify the presence of stated features or components, but do not preclude the presence or addition of one or more other features or components. In addition, the terms such as "unit," "-er (-or)," and "module" described in the specification refer to an element for performing at least one function or operation, and may be implemented in hardware, software, or the combination of hardware and software.

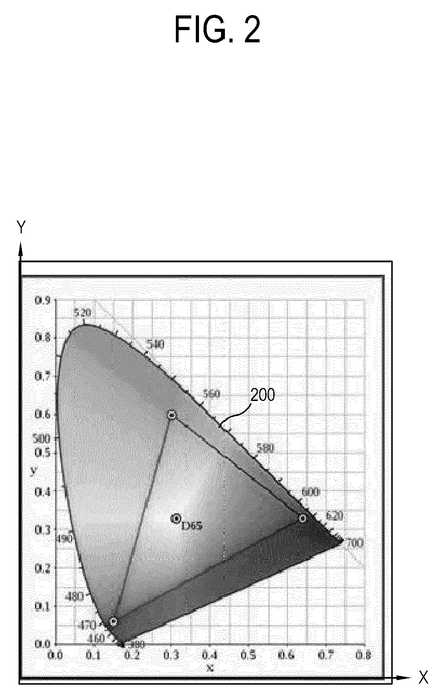

FIG. 2 is a chromaticity distribution diagram of an xyY color space 200 as prepared by International Commission on Illumination (CIE). The xyY color space 200 has been created on the basis of a study on humans' color perception. Human eyes have cone cells as a receptor for receiving three lights of short wavelength, medium wavelength and long wavelength. The xyY color space 200 has been created to represent actual colors by measuring how the colors received by the cone cells are perceived. The xyY color space 200 may mean a second color space in claims of this application. A curved boundary line in a contour of the chromaticity distribution diagram falls under a monochromatic light, and a wavelength of each monochromatic light is indicated in nanometer.

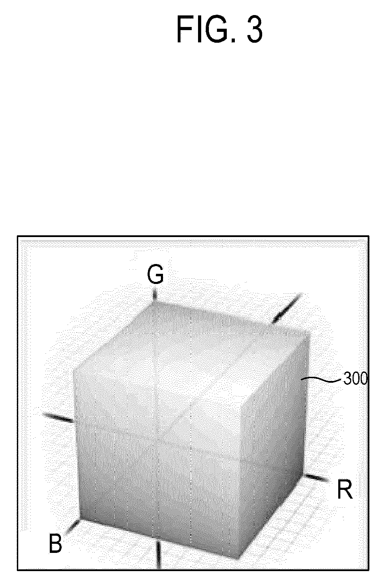

FIG. 3 is an RGB chromaticity distribution diagram of an RGB color space 300. The RGB chromaticity distribution diagram of the RGB color space 300 is expressed as a three-dimensional space of an additive color mixture of adding each of three colors of red, green and blue by applying such three colors to each axis. The RGB color space 300 may mean a first color space in claims of this application.

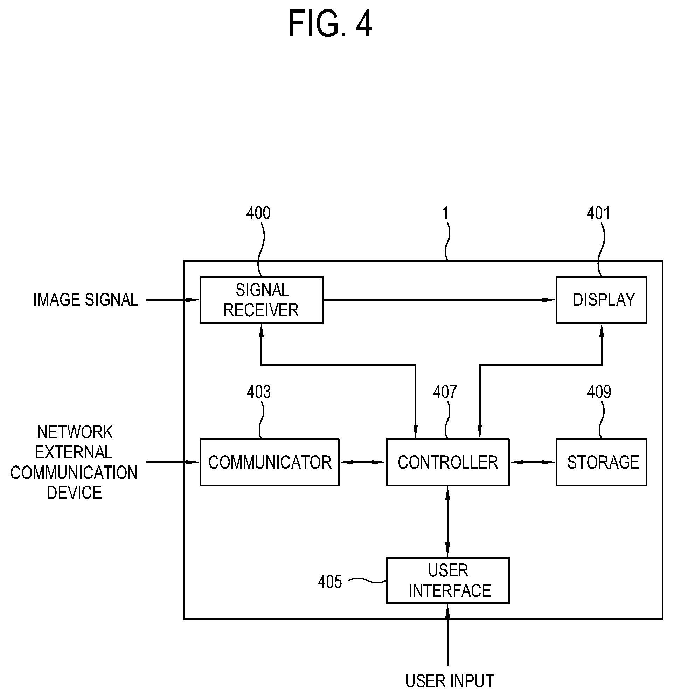

FIG. 4 is a block diagram of a display apparatus according to an exemplary embodiment.

A display apparatus 1 in FIG. 4 includes a signal receiver 400, a display 401, a communicator 403, a user interface 405, a storage 409 and a controller 407.

The signal receiver 400 receives and transmits an image signal/image data. The signal receiver 400 may be variously achieved in accordance with formats of the received image signal and the types of the display apparatus 1. For example, the signal receiver 400 may receive a radio frequency (RF) signal from a broadcasting station wirelessly, or may receive an image signal of composite video, component video, super video, SCART, high definition multimedia interface (HDMI), display port, unified display interface (UDI) or wireless HD standards by a wire. The signal receiver 400 may include a tuner to be tuned to a channel corresponding to a broadcast signal if the image signal is the broadcast signal, and may receive an image data packet from a server through a network.

The storage stores a property value of the RGB color space 300. The storage 409 may be provided as a writable ROM so that data can be maintained even when the power supplied to the display apparatus 1 is cut off and a change can be reflected. That is, the storage 409 may be provided as one among a flash memory, erasable programmable ROM (EPROM) and electrically erasable programmable ROM (EEPROM).

The display 401 displays an image based on an image signal and a property value stored in the storage 409 according to a control of the controller 407. More specifically, the controller 407 calibrates an image signal by applying a property value to a received image signal, and provides the calibrated image signal to the display 401. The display 401 displays a color-calibrated image based on the image signal calibrated by the controller 407. The display 401 may include a non-light emitting display panel and a backlight supplying light to the display panel, or include a light-emitting panel structure.

The user interface 405 may directly receive a manipulation command through a manipulation panel or receive a remote control signal including a user's manipulation command from a remote controller.

The communicator 403 may be provided to connect the display apparatus 1 and an external apparatus or network, and may include a plurality of connection ports according to various specifications, such as high definition multimedia interface (HDMI) and universal serial bus (USB). The communicator 403 may perform wired communication with a plurality of servers through a local area network (LAN). The communication performed by the communicator 403 may include a wireless communication. In the case of a wireless communication, the communicator 403 may include an RF circuit for transmitting and receiving an RF signal. The communicator 403 may perform a wireless communication through a wireless network by way of wireless LAN, Wi-Fi, etc. Otherwise, the communicator 403 may perform a wireless communication with an external apparatus or network by way of Bluetooth. Further, the communicator 403 may perform communication for Internet call and message transmission and reception.

The display apparatus 1 may receive data from an external device through the communicator 403. For example, the data may be a coordinate value of a color gamut expressible by the display 401 (hereinafter, "color coordinate value of the display 401") or a coordinate value of a color gamut that is subject to color calibration (hereinafter, "target color coordinate value"). The color gamut means a range of colors that can be reproduced in an xyY color space. Therefore, the color gamut of the display 401 means a range of colors that the display 401 can reproduce according to a property value of the display 401. The color coordinate value of the display 401 may be measured and input through the communicator 403 before the display apparatus 1 is provided to a user. The target color coordinate value may be standards specifications, such as sRGB, AdobeRGB, BT601 or certified color coordinate or a coordinate value input by a user voluntarily.

The controller 407 controls overall operations of the display apparatus 1. For example, the controller 407 may process and calibrate an image signal received by the signal receiver 400 and may control the display 401 to display the processed and calibrated image, or perform a color calibration of the display 401 to change a property value of the display 401. The processing of a signal performed by the controller 407 includes decoding, image enhancing and scaling. To perform the color calibration of the display 401, the controller 407 generates a conversion coefficient M for a conversion from an xyY color space to an RGB color space based on a stored color coordinate value of the display 401. The conversion coefficient M that expresses in the RGB color space a point of the xyY color space may be generated on the basis of the color coordinate value of the display 401 and a white value, and a detailed process for generating the conversion coefficient M will be described later.

The controller 407 may calculate a plurality of index color coordinate values of the xyY color space corresponding to a plurality of color values within a range that the display 401 may display in the RGB color space. The display 401 in this exemplary embodiment is configured to reproduce a limited range of colors according to a preset color gamut, but may also reproduce colors in a range wider than the limited color gamut. To calibrate the color coordinate value of the display 401 into the target color coordinate value, the controller 407 calculates a plurality of index color coordinate values corresponding to each color value by converting a plurality of color values in the range that the display 401 may express into the xyY color space using the conversion coefficient M, and selects an index color coordinate value whose color difference from the target color coordinate value is a predetermined threshold or less, out of the plurality of calculated index color coordinate values. Then, the controller 407 changes the property value stored in the storage 409 based on the selected index color coordinate value, and controls the display 401 to display an image based on the changed property value.

The color calibration process performed by the display apparatus 1 and the controller 407 of the display apparatus according to an exemplary embodiment has been briefly described above. Below, an exemplary embodiment of a process of calculating each coefficient for performing the color calibration and a condition precedent to the color calibration will be described.

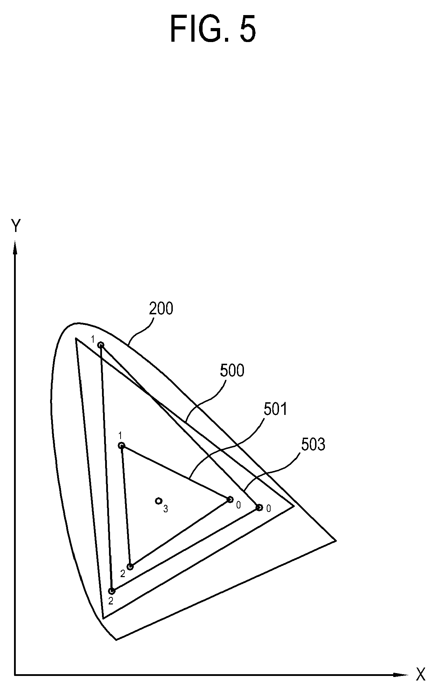

FIG. 5 illustrates an xyY color space including a color gamut that may be reproduced by the display apparatus according to an exemplary embodiment, a color gamut that is set to limit color reproduction of a display, and a color gamut that is subject to color calibration.

Representing in the xyY color space the property value stored in the storage 409 of the display apparatus 1 is a color gamut 501 that is currently set with respect to the display 401 (hereinafter, the color gamut of the display 401). The impression of colors that the display apparatus 401 may reproduce varies depending on a set color gamut. A user may calibrate the color coordinate of the display 401 and change the color gamut to reproduce a different impression of color through the display 401. A color gamut 503 that is subject to calibration in this exemplary embodiment (hereinafter, target color gamut) may be wider than the color gamut 501 of the display 401, but is only an example and is not limited thereto. Also, the target color gamut 503 may not be located within a color gamut 500 that may be reproduced by the display 401. In this exemplary embodiment, a size or form of the color gamut 500 that may be reproduced by the display 401 is not limited to FIG. 5, and may be displayed in the xyY color space as a gamut of various sizes and forms representing colors that may be reproduced by the display 401.

The calibration from the color coordinate of the display 401 into the target color coordinate may be made by adjusting a color value of each color coordinate. Below, conversion of color spaces will be described.

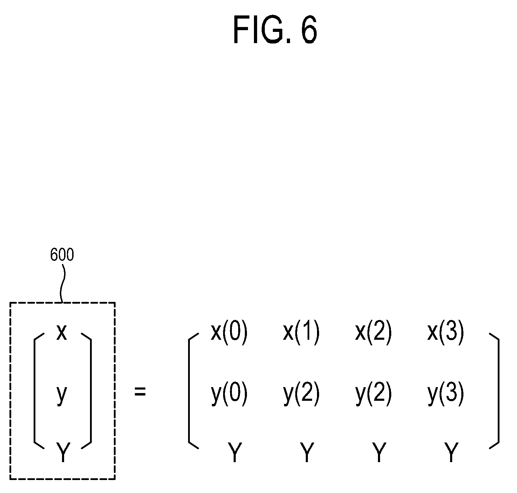

FIG. 6 illustrates an xyY matrix that represents a coordinate value in the xyY color space. Each element forming an xyY matrix 600 means a color coordinate value of an xyY color space falling under each of points 0, 1, 2 and 3 of the color gamut 501 of the display 401 and the target color gamut 503 in FIG. 5. The points 0, 1 and 2 fall under red, green and blue, respectively, and the point 3 is a reference white value that is used as a base for designating other colors. An extracted color coordinate value is used to generate the conversion coefficient M.

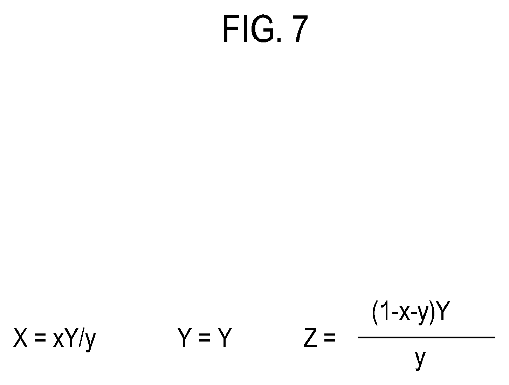

FIG. 7 illustrates a formula for converting a coordinate value of the xyY color space into a coordinate value of an XYZ color space. The xyY color space is used for representing colors, and XYZ represents human tristimulus values. Because the conversion from the xyY color space into the XYZ color space may be made through simple calculation as shown in FIG. 7, the xyY color space and the XYZ color space are not separate color spaces. Accordingly, the second color space in claims may mean one among the xyY color space and the XYZ color space.

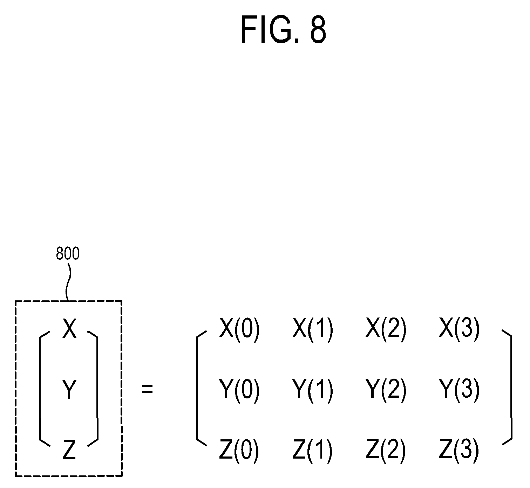

FIG. 8 illustrates an XYZ matrix that represents a coordinate value of an XYZ color space. As explained with respect to FIG. 6, each element of an XYZ matrix 800 means a coordinate value of the XYZ color space falling under each of points 0, 1, 2 and 3 in FIG. 5.

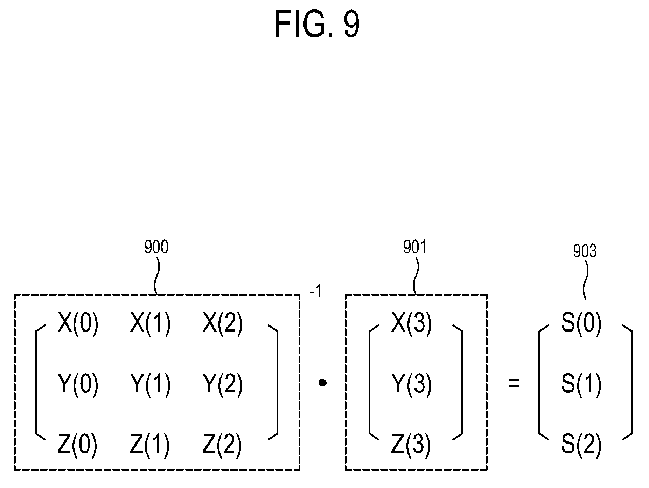

FIG. 9 illustrates a formula for calculating a luminance ratio, i.e., for calculating an S matrix 903 as a ratio of a matrix 901 having a reference white value component with respect to a matrix 900 having an RGB component out of the XYZ matrix 800. The S matrix 903 is calculated by performing an inner product of an inverse matrix of the matrix 900 having the RGB component and the matrix 901 having the reference white value component.

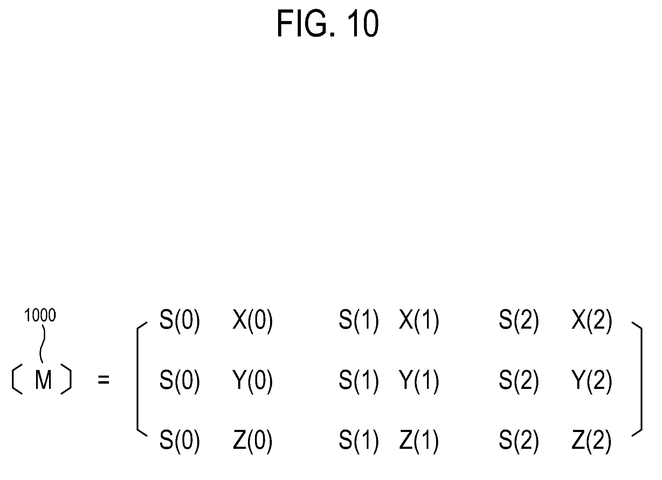

FIG. 10 illustrates a formula for calculating the conversion coefficient M for converting the RGB color space into the XYZ color space. To calculate a matrix 1000 of the conversion coefficient M, each element of the S matrix 903 is multiplied by each element of the matrix 900 having the RGB component out of the XYZ matrix 800. Accordingly, the matrix 1000 of the conversion coefficient M that may be used to convert the color coordinate value of the display apparatus 1 is calculated.

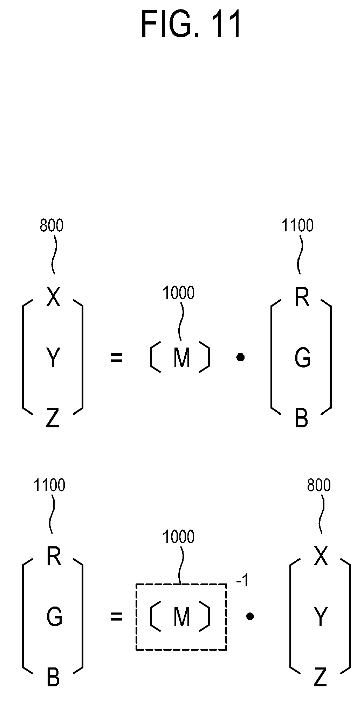

FIG. 11 illustrates a relationship among the RGB color space, the XYZ color space and the conversion coefficient. An XYZ matrix 800 may be obtained by performing an inner product of the matrix 1000 of the conversion coefficient M and an RGB matrix 1100 while the RGB matrix 1100 may be also obtained by performing an inner product of the XYZ matrix 800 and an inverse matrix of the matrix 1000 of the conversion coefficient M. The controller 407 may calculate a plurality of index color coordinate values by applying the conversion coefficient M obtained in FIG. 10 to the plurality of color values within a range displayable by the display 401, and may calculate the property value by applying the conversion coefficient M to the index color coordinate value selected through color difference calculation.

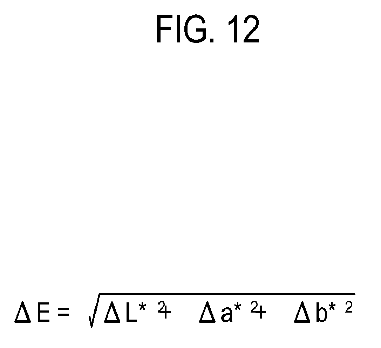

FIG. 12 illustrates a standard color difference formula comparing a color difference in a Lab color space to identify a color difference among color coordinates. It is difficult to compare a color space for expressing coordinate values of real colors or a color difference between the xyY color space and the XYZ color space, and thus CIE defined the Lap color space to compare two color spaces through a standard color difference formula dE2000. The Lab color space may mean a third color space in claims of this application. L* means luminosity, a* is chromaticity and +a* represents a red direction and -a* means a green direction. b* is also chromaticity, and +b* represents a yellow direction and -b* represents a blue direction. The plurality of index color coordinate values that has been calculated by applying the conversion coefficient M to a plurality of color values in a range displayable by the display 401 is converted from the XYZ color space into the Lab color space, and the target color coordinate value is also converted from the XYZ color space into the Lab color space to thereby calculate a color difference. Then, the controller 407 selects an index color coordinate value whose color difference is a predetermined threshold value or less, based on the calculated color difference. That is, if the calculated index color coordinate value is the target color coordinate value and predetermined threshold value or less, a calculation of the color difference of all of index color coordinate values and target color coordinate value is omitted to thereby perform color calibration more promptly. The conversion from the XYZ color space into the Lab color space may be easily made by a known method.

In an exemplary embodiment, the controller 407 may select an index color coordinate value having the smallest color difference by calculating the color difference between the plurality of index color coordinate values and the target color coordinate value. According to this exemplary embodiment, the controller 407 calculates the color difference between all of the plurality of index color coordinate values and the target color coordinate value, and selects the index color coordinate value having the smallest color difference to thereby perform color calibration more accurately.

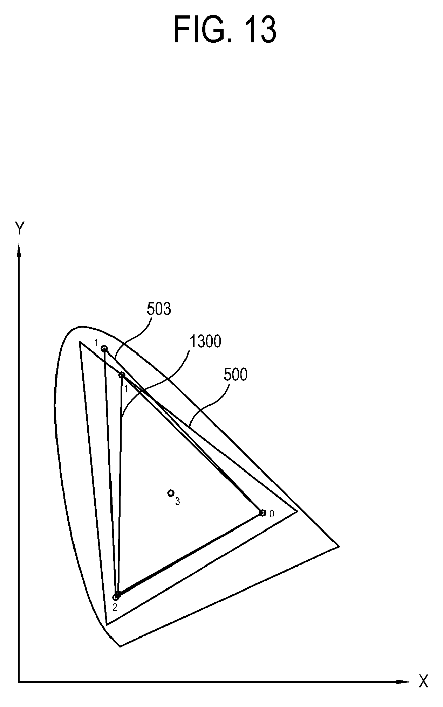

FIG. 13 illustrates the target color gamut and the calibrated color gamut in the xyY color space after a color calibration is completed according to an exemplary embodiment. Because a part of the color gamut 503 is out of the range of the color gamut 500 that may be reproduced by the display 401, a calibrated color gamut 1300 is not perfectly consistent with a target color gamut 503. Also, according to an exemplary embodiment, if a color difference between the calculated index color coordinate value and the target color coordinate value is a threshold value or less, the index color coordinate value is selected, and therefore, the calibrated color gamut 1300 is not perfectly consistent with the target color gamut 503.

According to another exemplary embodiment, if the conversion coefficient M is applied to all of color values within the range displayable by the display 401 to calculate all of the plurality of index color coordinate values, and the index color coordinate value having the smallest color difference from the target color coordinate value is selected and the color calibration is performed thereto, the calibrated color gamut 1300 and the target color gamut 503 are consistent with each other within the range of the color gamut 500 that may be reproduced by the display 401. Out of the range of the color gamut 500 that may be reproduced by the display 401, the calibrated color gamut 1300 and the target color gamut 503 are not perfectly consistent with each other while the color difference therebetween is slight.

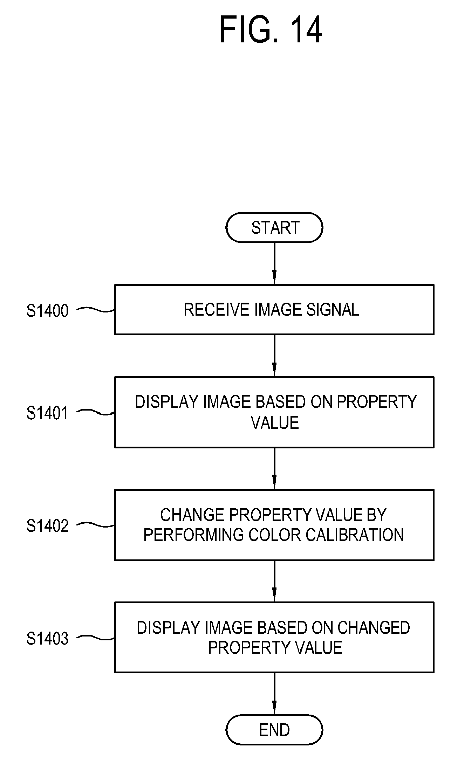

FIG. 14 is a flowchart of an operation process of the display apparatus according to an exemplary embodiment. At operation S1400, the signal receiver 400 receives an image signal from the exterior. At operation S1401, the display 401 displays an image based on the received image signal and the property value stored in the storage 409. At operation S1402, the controller 407 changes the property value by performing the color calibration. At operation S1403, the display 401 displays an image based on the changed property value.

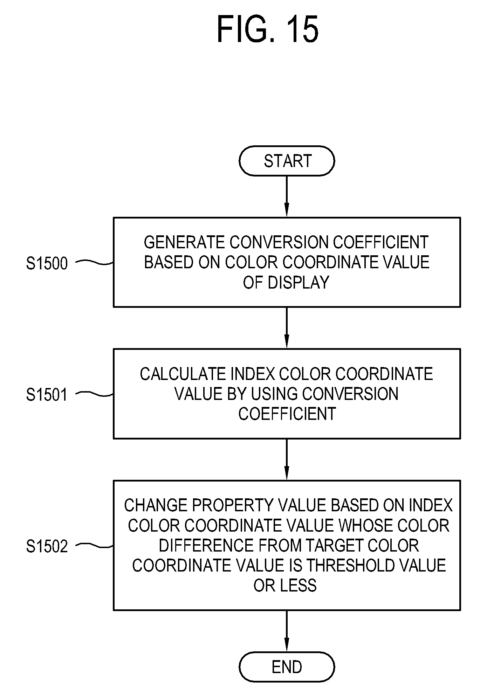

FIG. 15 is a flowchart of a color calibration process at S1402 in FIG. 1 according to an exemplary embodiment. At operation S1500, the controller 407 generates the conversion coefficient M based on the color coordinate value of the display 401. At operation S1501, the controller 407 calculates the index color coordinate value by applying the conversion coefficient M to the color value within the range displayable by the display 401. Lastly, at operation S1502, the controller 407 changes the property value based on the index color coordinate value whose color difference from the target color coordinate value is a threshold value or less.

According to an exemplary embodiment, the controller 407 selects the index color coordinate value whose color difference from the target color coordinate value is the smallest out of the plurality of index color coordinate value, and changes the property value based on the selected index color coordinate value, as described above.

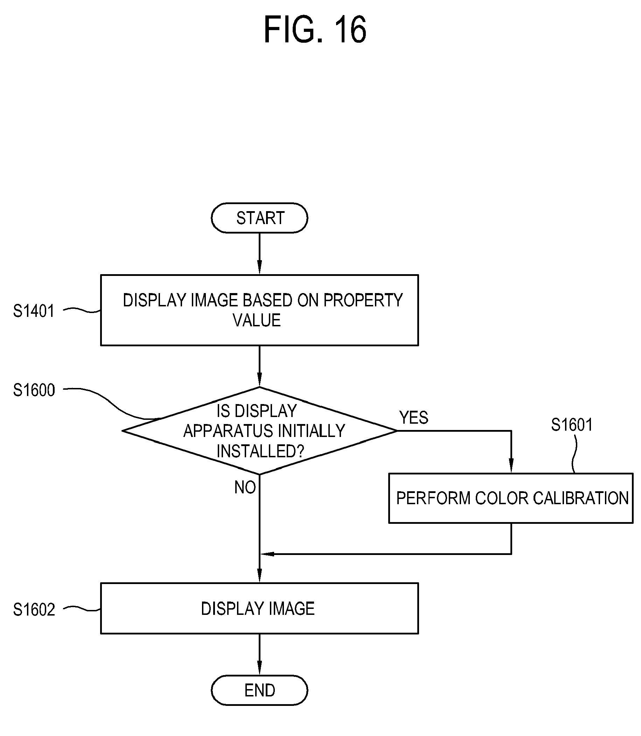

FIG. 16 is a flowchart of an operation process of the display apparatus that displays an image by performing the color calibration when it is initially installed according to an exemplary embodiment.

If a user supplies power to the display apparatus 1 to initially install it, the display apparatus 1 receives an image signal from the exterior (S1400 in FIG. 14), and displays an image based on the preset property value (S1401 in FIG. 14). At operation S1600, the controller 407 determines whether it is the time when the display apparatus 1 is initially installed. The initial installation of the display apparatus 1 falls under a condition for the performance of the color calibration by the display apparatus 1. Thus, if the display apparatus 1 is initially installed, the controller 407 changes the stored property value by performing the color calibration of the display 401 at operation S1601. The color calibration process is shown and explained in FIG. 15. At operation S1602, the display 401 displays an image based on the changed property value.

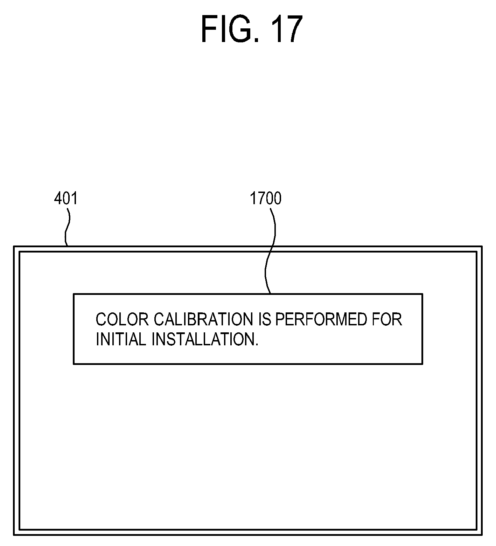

FIG. 17 illustrates a user interface (UI) that is provided to a user before the color calibration is performed when the display apparatus 1 is initially installed. If a user supplies power to the display apparatus 1 before initially using it, the controller 407 determines whether the display apparatus 1 is initially installed (S1600). If the controller 407 determines that the display apparatus 1 is initially installed, it displays on the display 401 a UI including an item 1700 notifying that the color calibration is to be performed, and then performs the color calibration.

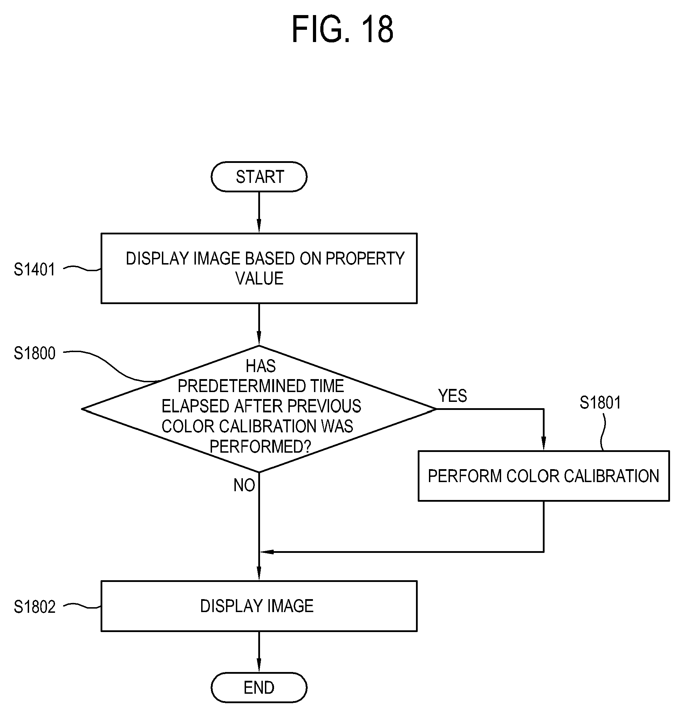

FIG. 18 is a flowchart of an operation process of the display apparatus that displays an image by performing the color calibration predetermined time after the previous color calibration is performed according to an exemplary embodiment.

At operation S1800, the controller 407 determines whether predetermined time has elapsed after the color calibration was performed. If so, the controller 407 changes the stored property value by performing the color calibration of the display 401 at operation S1801. The color calibration process is illustrated and explained in FIG. 15. At operation S1802, the display 401 displays an image based on the changed property value.

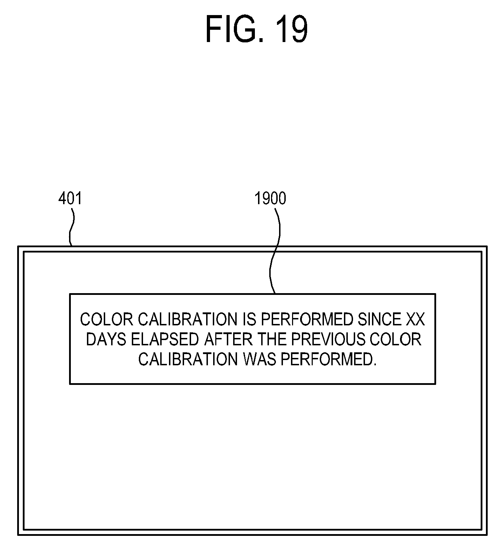

FIG. 19 illustrates a UI that is provided to a user before the color calibration is automatically performed predetermined time after the previous color calibration is performed. Whenever a user uses the display apparatus 1, the controller 407 determines whether predetermined time has elapsed after the previous color calibration was performed (S1800). If the controller 407 determines that the predetermined time has elapsed, it displays in the display 401 a UI including an item 1900 notifying that the color calibration is performed predetermined time after the previous color calibration is performed, and performs the color calibration.

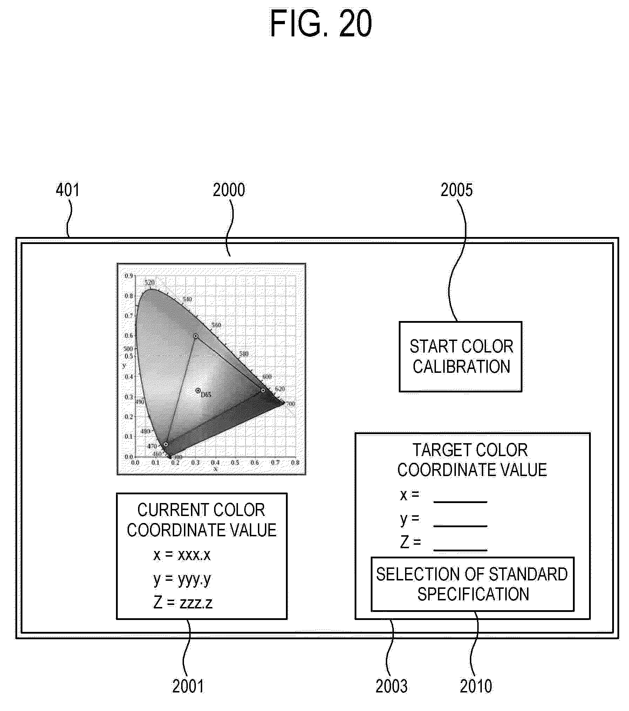

FIG. 20 illustrates a display that displays a UI for performing the color calibration according to an exemplary embodiment.

If a user inputs a command to the user interface 405 to perform the color calibration, the controller 407 displays in the display 401 a UI including a plurality of items 2000, 2001, 2003, 2005, and 2010 for performing the color calibration of the display 401. The UI displayed in the display 401 may include an xyY color space 2000 including the color gamut 501 of the display 401 and the target color gamut 503, a color coordinate value 2001 of the display 401, a target color coordinate value 2003, and a start color calibration button 2005. A user may confirm the color gamut 501 and the color coordinate value 2001 set with respect to the display 401 and input the target color coordinate value 2003 to thereby perform the color calibration of the display 401. If a user does not exactly know the target color coordinate value 2003, he/she may select a standard specification selection item 2010 to thereby receive the item of the color coordinate value of various preset standard specifications.

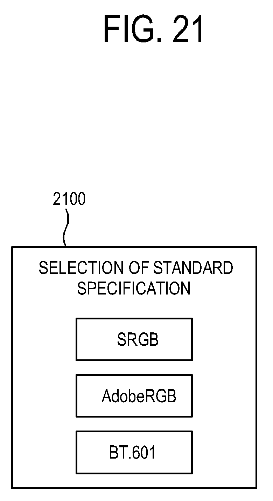

FIG. 21 illustrates an example of a plurality of standard specifications provided to select the target color coordinate according to an exemplary embodiment. As shown in FIG. 20, a user may directly input the target color coordinate value 2003 to a UI provided to him/her. Otherwise, as shown in FIG. 21, a user may select a preset standard specification 2100 to set the target color coordinate 2003 of the display 401.

As described above, color calibration is performed for the display apparatus to express colors without spectrophotometer measuring an image displayed by the display apparatus.

In addition, the exemplary embodiments may also be implemented through computer-readable code and/or instructions on a medium, e.g., a computer-readable medium, to control at least one processing element to implement any above-described exemplary embodiments. The medium may correspond to any medium or media that may serve as a storage and/or perform transmission of the computer-readable code.

The computer-readable code may be recorded and/or transferred on a medium in a variety of ways, and examples of the medium include recording media, such as magnetic storage media (e.g., ROM, floppy disks, hard disks, etc.) and optical recording media (e.g., compact disc read only memories (CD-ROMs) or digital versatile discs (DVDs)), and transmission media such as Internet transmission media. Thus, the medium may have a structure suitable for storing or carrying a signal or information, such as a device carrying a bitstream according to exemplary embodiments. The medium may also be on a distributed network, so that the computer-readable code is stored and/or transferred on the medium and executed in a distributed fashion. Furthermore, the processing element may include a processor or a computer processor, and the processing element may be distributed and/or included in a single device.

The foregoing exemplary embodiments are examples and are not to be construed as limiting. The present teaching can be readily applied to other types of apparatuses. Also, the description of the exemplary embodiments is intended to be illustrative, and not to limit the scope of the claims, and many alternatives, modifications, and variations will be apparent to those skilled in the art.

## Claims

1. A display apparatus comprising:
a signal receiver configured to receive an image signal;
a display;
a storage configured to store a property value of the display in a first color space,
wherein the display is configured to display an image based on the received image signal and the stored property value of the display; and
a controller configured to perform color calibration of the display in which the controller is configured to:
generate a conversion coefficient for a conversion from the first color space into a second color space, based on a color coordinate value of the display in a second color space different from the first color space;
determine index color coordinate values in the second color space corresponding to each of color values in the first color space displayable by the display, based on the conversion coefficient;
change the stored property value based on an index color coordinate value having a color difference from a preset target color coordinate value of the display within a threshold value, among the index color coordinate values; and
control the display to display another image based on the changed property value.

2. The display apparatus according to claim 1, wherein the signal receiver is further configured to receive, from an external device, at least one among the color coordinate value and the preset target color coordinate value of the display.

3. The display apparatus according to claim 1, wherein the conversion coefficient is generated based on the color coordinate value of the display and a white value.

4. The display apparatus according to claim 1, wherein the stored property value is changed based on an index color coordinate value having a smallest color difference from the preset target color coordinate value, among the index color coordinate values.

5. The display apparatus according to claim 1, wherein the controller is further configured to determine the color difference based on a dE2000 specification.

6. The display apparatus according to claim 1, wherein the controller is further configured to:
convert the index color coordinate value of the second color space into an index color coordinate value of a third color space; and
determine the color difference based on the index color coordinate value of the third color space.

7. The display apparatus according to claim 1, wherein the color calibration is performed in response to a predetermined color calibration condition being satisfied.

8. The display apparatus according to claim 7, wherein the color calibration condition comprises an initial installation of the display apparatus.

9. The display apparatus according to claim 7, wherein the color calibration condition comprises an elapse of a predetermined time after a previous color calibration is performed.

10. The display apparatus according to claim 1, further comprising a user interface configured to receive a user input,
wherein the color calibration is performed in response to the received user input.

11. The display apparatus according to claim 1, wherein the display is further configured to display a user interface (UI) comprising one or more items for the color calibration, and
the color calibration is performed based on a user input using the one or more items of the UI.

12. The display apparatus according to claim 11, wherein the one or more items correspond to at least one among the color coordinate value and the preset target color coordinate value of the display.

13. A control method of a display apparatus, the control method comprising:
receiving an image signal;
displaying an image based on the received image signal and a property value of a display in a first color space;
performing color calibration of the display, the color calibration comprising:
generating a conversion coefficient for a conversion from the first color space into a second color space, based a color coordinate value of the display in the second color space different from the first color space;
determine index color coordinate values in the second color space corresponding to each of color values in the first color space displayable by the display, based on the conversion coefficient; and
changing the property value based on an index color coordinate value having a color difference from a preset target color coordinate value of the display within a threshold value, among the index color coordinate values; and displaying another image based on the changed property value.

14. The control method according to claim 13, further comprising receiving, from an external device, at least one among the color coordinate value and the preset target color coordinate value of the display.

15. The control method according to claim 13, wherein the generating the conversion coefficient comprises generating the conversion coefficient based on the color coordinate value of the display apparatus and a white value.
